# EUROPEAN PATENT APPLICATION

(11) **EP 4 844 972 A1**
(43) Date of publication of application: **25.11.2026**
(21) Application number: 25178230.6
(22) Date of filing: 22.05.2025
(51) Int. Cl.: H02J 3/24

(54) **METHOD FOR REDUCING DIRECT CURRENT COMPONENT IN AN ELECTRICAL GRID, VOLTAGE SOURCE CONVERTER CONTROL UNIT, AND SYSTEM FOR PERFORMING THE METHOD**

(71) Applicant: Hitachi Energy Ltd, 8050 Zürich (CH)
(72) Inventor: Christe, Alexandre, 3900 Brig (CH); Schlegel, Christian, 8142 Uitikon (CH)
(74) Representative: Epping - Hermann - Fischer

(57) **Abstract**

This disclosure provides a method for reducing direct current, DC, component in an electrical grid, the method comprising: detecting a voltage step in the electrical grid; and inserting a virtual resistance (R) into a current path from a voltage source converter, VSC, to the electrical grid as a response to a detection of the voltage step.

Moreover, a voltage source converter, VSC, control unit (C) for reducing direct current, DC, component in an electrical grid is provided, wherein the VSC control unit is configured to insert a virtual resistance (R) into a current path from a voltage source converter, VSC, to the electrical grid as a response to a detection of a voltage step. Furthermore, a system comprising such VSC control unit (C) is disclosed.

## Description

The present disclosure relates to a method for reducing direct current component in an electrical grid, and further relates to a voltage source converter control unit and a system for performing the method.

In an electrical grid, during grid transients, an undesired sharp deviation of a measured grid voltage from an expected grid voltage may occur. Such sharp deviation can be referred to as a voltage step, describing a sudden change of the voltage within short periods of time. The voltage step can be described by a voltage drop or a voltage increase which may occur suddenly or periodically with different intensities within short periods of time, for instance within a few seconds or microseconds.

Such voltage step is also known as transient voltage, which is a phenomenon that may affect the operation of transformers and/or of a voltage source converter (VSC). The faster and larger the deviation of the voltage, the more it disturbs the operation of the voltage source converter and/or of the transformers.

Between a VSC and a point of common coupling (PCC) of the grid, an inductance L is present. This inductance L can be a transformer or a reactor or a combination of both. In addition, usually a physical resistance R is present. The RL circuit can be described by a first-order differential equation $U \left(t\right) = L \frac{dI \left(t\right)}{dt} + RI \left(t\right) ,$ for which the well-known solution to a step response in U is $I \left(t\right) = {I}_{0} {e}^{- \frac{R}{L} t} + \frac{U}{R} \left(1-{e}^{- \frac{R}{L} t}\right) ,$ where U is the voltage, I the current, L the inductance and R the resistance. The larger the voltage step that is applied to the circuit, the larger is the initial DC current given by $\frac{U}{R}$. Due to the small resistance R, the current decay, given by the time constant $τ = \frac{L}{R}$*,* can be very slow.

It is known that direct current, DC, component is not desired in an alternating current, AC, grid, since they can cause saturation of transformers, which may lead to disturbances in the grid and, in the worst case, damage the transformers. It is therefore desired to eliminate or minimize the DC component in the current and hence in the voltage as fast as possible. Moreover, in a control method that in normal operation does not use a current measurement feedback, i.e. current control, it is also desired to reduce the decay time.

The decay of a current's DC component can be defined by the time constant *τ* of the respective impedance circuit, given by $τ = \frac{L}{R}$*,* where L is the inductance and R is the resistance of that circuit.

For having a rapid decay of the DC component occurring during a grid disturbance, in particular caused by the occurrence of voltage steps or transient voltages, it can be beneficial to have a large resistive impedance in a current path between the VSC and the PCC. However, during normal operation, **i.e.** undisturbed operation, any additional impedance in the circuit increases the converter system's losses. Therefore, a constantly high resistive impedance is not desirable. Thus, one subject-matter is to provide a more appropriate and efficient solution for reducing direct current, DC, component in an electrical grid.

Embodiments of the disclosure, for instance as claimed in the independent claims related to a method for reducing direct current component in an electrical grid, a voltage source converter control unit and a system for performing the method, address the above shortcomings in the art in whole or in part. Further embodiments of the method, the voltage source converter control unit and the system for performing the method are the subject-matter of the further claims.

According to an embodiment of a method for reducing direct current, DC, component in an electrical grid, the method comprises detecting a voltage step in the electrical grid. The method further comprises a step of inserting a virtual resistance into a current path from a voltage source converter, VSC, to the electrical grid as a response to a detection of the voltage step. The detecting of the voltage step can be performed by detecting a drop voltage and/or an overcurrent.

Inserting a virtual resistance or virtually inserting a resistance may be understood such that instead of inserting the resistance physically, a virtual resistance is inserted for a current in a current path to behave as if a physical resistance were inserted. For instance, a resistance or impedance value is used for determining an adjusted value or adjusted voltage, wherein the adjusted value or adjusted voltage is used to adjust a voltage reference. The adjusted voltage reference can be applied to an output of the VSC for the resulting current flowing for instance from the VSC to a point of common coupling in the grid to behave as if a physical resistance were inserted. Since the adjusted value or adjusted voltage can be adapted to the behavior of the voltage step, this method provides a simplified but efficient and flexible solution for encountering undesired effects caused by the voltage step in the electrical grid. In particular, inserting the virtual resistance into the current path from the voltage source converter to the grid will help reduce effects of the voltage deviation, for instance DC offsets in the measured current, in an especially fast, flexible and efficient manner.

A voltage step can also be understood as a sudden deviation of a grid voltage from its sinusoidal path. The voltage step can be seen as a transient voltage in the electrical grid. The deviation can occur in either direction, up and/or down. Such a voltage step can be detected for instance by voltage drop detection. Usually, the detection of an overcurrent is an indication of the presence of a voltage step. Thus, the voltage step can also be detected by overcurrent detection.

According to a further embodiment of the method, the virtual resistance is inserted into the electrical grid by a control algorithm only when the voltage step is detected. Here, the resistive impedance or resistance can be applied for a limited time during grid disturbances, for instance during grid transients. The resistive impedance or resistance can be applied virtually, without the need for applying a physical resistance. Thus, during normal operation, **i.e.** undisturbed operation, it is not necessary to have a constantly high resistive impedance or resistance in the current path, for instance between the VSC and the PCC.

According to a further embodiment of the method, a magnitude of the virtual resistance is inserted into the current path from the voltage source converter, VSC, to the electrical grid in a time-dependent manner. By doing so, the magnitude of the virtual resistance can be flexibly adapted to the grid transients. Moreover, in this way, a desired decay time can be achieved in an efficient manner.

According to a further embodiment of the method, the insertion of the virtual resistance is performed by adjusting an output voltage of the VSC. An adjustment of the output voltage of the VSC can be provided by an adjustment value which is calculated by multiplication of a current with a pre-defined resistance value. Here, the current can be a current flowing between the VSC and a point of common coupling, PCC, of the electrical grid. The adjustment value can be an adjustment voltage.

According to a further embodiment of the method, the pre-defined resistance value is an impedance being a pure resistance. The resistance value can be adjustable for achieving a targeted decay time. Thus, a DC component decay time is adjustable by different pre-defined resistance values.

According to a further embodiment of the method, it further comprises a step of adding the adjustment value to a voltage reference for obtaining an adjusted voltage reference. The voltage reference can be provided by a VSC control. The method further comprises applying the adjusted voltage reference to an output voltage of the VSC. The VSC control can be an algorithm configured to control for instance the time of inserting the virtual resistance and/or a magnitude, for instance a time-dependent magnitude, of the virtual resistance. The VSC control algorithm may be implemented in a VSC control unit, which can be an integral part of the VSC or physically separated from the VSC.

According to a further embodiment of the method, it further comprises a step of controlling a duration of inserting the virtual resistance for minimizing disturbance of the VSC control. Such a step can be performed by an activation shaping unit which can comprise a time setting unit. This step can help prevent sharp changes in a voltage reference, for instance at a voltage output of the VSC.

According to a further embodiment of the method, it comprises a step of filtering an activation signal for preventing sharp changes in the voltage reference. Such a step can be performed by a filtering unit, which can be part of the activation shaping unit. This step can further reduce possible sharp changes in the voltage reference, for instance at the voltage output of the VSC.

According to a further embodiment of the method, the detecting of the voltage step in the electrical grid comprises a step of comparing a measured grid voltage with an expected grid voltage at a point of common coupling, PCC, output of the electrical grid or at a voltage source converter, VSC, output. This method step can be performed by a voltage drop detection process.

According to a further embodiment of the method, the detecting of the voltage step in the electrical grid comprises detecting a deviation of a measured grid voltage from an expected grid voltage, wherein the deviation is a difference between the measured grid voltage and the expected grid voltage. For instance, the deviation is larger than a threshold value. This method step can be performed by a voltage drop detection process.

According to a further embodiment of the method, the detecting of the voltage step in the electrical grid comprises determining a ratio of a measured grid voltage and an expected grid voltage. The measured grid voltage can differ, for example, by at least 3 %, 5 % or 10 % from the expected grid voltage.

According to a further embodiment of the method, the voltage step is detected by a change in a grid voltage, wherein the change in the grid voltage is larger than a pre-defined value within a pre-defined time interval.

According to a further embodiment of the method, the voltage step is detected by an overcurrent detection, wherein a current flowing between the voltage source converter, VSC, and a point of common coupling, PCC, of the electrical grid is evaluated. The current can be measured at the PCC or at the VSC output/terminals. It is also possible that the current is calculated by measuring the voltage at the VSC and the voltage at the PCC. Furthermore, it is also possible to evaluate the current from current measurements in the VSC, for instance in the phase legs/arms/branches.

The electrical grid described in this disclosure can be an alternating current, AC, grid. For example, the electrical grid is a two-phase electrical grid which can be used, for example, for rail application.

According to an embodiment of a voltage source converter, VSC, control unit, the VSC unit is configured for reducing direct current, DC, component in an electrical grid. Here, the VSC control unit is configured to insert a virtual resistance into a current path from a voltage source converter, VSC, to the electrical grid as a response to a detection of a voltage step. In other words, the VSC control unit is configured to virtually insert a resistance into a current path from a voltage source converter, VSC, to the electrical grid as a response to a detection of a voltage step.

According to an embodiment of a system for reducing direct current, DC, component in an electrical grid, the system comprises a detection unit and a voltage source converter, VSC, control unit. The detection unit is configured to detect a voltage step in the electrical grid. The VSC control unit is configured to insert a virtual resistance into a current path from a voltage source converter, VSC, to the electrical grid as a response to a detection of the voltage step. For example, the detection unit is configured to detect a voltage step indicated by a voltage drop detection and/or by an overcurrent detection.

According to a further embodiment of the system, the system is configured to perform the embodiments of the method described in this disclosure. The system can further comprise at least one of: a time setting unit, a filtering unit and a decision logic unit.

The present disclosure describes several aspects of a method for reducing direct current, DC, component in an electrical grid, a voltage source converter, VSC, control unit, and a system comprising the VSC control unit for reducing DC component in an electrical grid on the basis of their embodiments and examples. Every feature described with respect to one of the embodiments or examples, even if the respective feature is not explicitly mentioned in the context of the specific embodiment or example, is also disclosed for the other embodiments and examples. For example, all of the method, the VSC control unit and the system comprising the VSC control unit are configured to reduce DC component in an electrical grid. Thus, features and advantages described in connection with the method can be used for the VSC control unit and the system, and vice versa.

While the disclosure is amenable to various modifications and alternative forms, specifics thereof are shown by way of example in the figures and will be described in detail. It should be understood, however, that the intention is not to limit the disclosure to the particular described embodiments and examples. On the contrary, the intention is to cover all modifications, equivalents and alternatives falling within the scope of the disclosure defined by the appended claims.

The accompanying figures are included to provide a further understanding. It is to be understood that the examples shown in the figures are illustrative representations and are not necessarily true to scale. It should be understood that the intention is not to limit the invention to the figures and the description of the figures.
Figure 1 shows a schematic block diagram illustrating a general concept of a method for reducing DC component in an electrical grid.
Figures 2 and 3 show further schematic block diagrams showing more details of the general concept of the method for reducing DC component in the electrical grid.

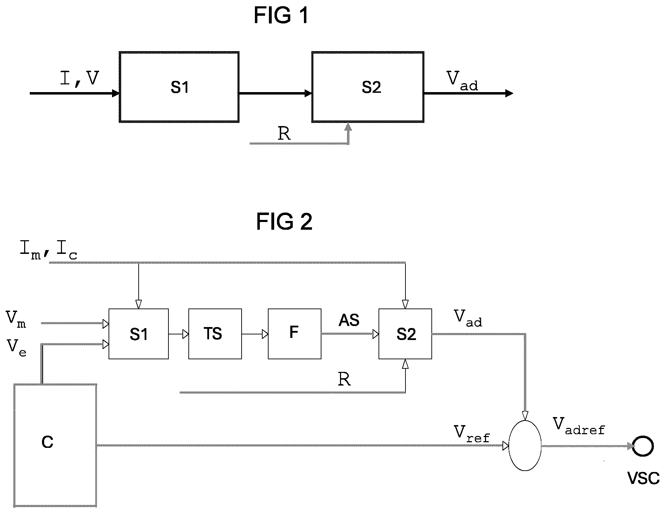

Figure 1 shows some steps of a method for reducing direct current component in an electrical grid. The method comprises a step S1 of detecting a voltage step in the electrical grid and a step S2 of inserting a virtual resistance R into a current path towards the electrical grid. For instance, the current path is a path from a voltage source converter, VSC, to the electrical grid. Inserting the virtual resistance R results in an adjusted value or adjusted voltage V_{ad}. The adjusted value or adjusted voltage V_{ad} can be used to adjust a voltage reference provided for instance by a VSC control.

The adjusted voltage reference can be applied to an output voltage of the VSC.

According to this disclosure, a solution for reducing DC component in an electrical grid is provided by inserting a resistive impedance, i.e. a resistance, only when a voltage step is detected. Instead of inserting the resistance physically, it is suggested that a virtual resistance is inserted by a control algorithm. In other words, it is suggested to virtually insert a resistance as a response to a detection of the voltage step. Hence, "virtually inserting a resistance" or "inserting a virtual resistance" may be understood such that the resistance is not inserted physically but is inserted virtually by a control algorithm.

Using this method, the size and duration of DC component in the grid voltage can be reduced. In particular, deviations of the grid voltage from the expected values, for instance expected voltages, can be reduced. Moreover, the risk of saturation of transformers located in the electrical grid or located at an output of a voltage source converter (VSC) as well as related negative effects can be minimized. Furthermore, a more robust converter system without additional material costs can be provided.

In the following, some concepts for detecting the necessity for inserting the resistance and some concepts for inserting such resistance will be described.

In Figure 1, a first step S1 for detecting the voltage step in an electrical grid is shown. The voltage step can be referred to as a transient voltage. The step S1 can be considered as a detection step S1. The voltage step can be detected by analyzing a voltage V and/or a current I in the electrical grid.

The detection of the necessity for inserting a virtual resistance can be done in different ways, for instance by evaluating a current flowing between a voltage source converter (VSC) and a point of common coupling (PCC) of the electrical grid. This can be performed either by analyzing a measured quantity directly or by analyzing a quantity calculated from other measured or estimated quantities.

For instance, an unexpectedly high current is an indication of a rapid change in the grid voltage, which may be caused by a voltage step. Alternatively or in addition, a comparison can be performed between the measured voltage and the expected voltage at the PCC or at an VSC output. This comparison can be performed for example by studying a difference or a ratio of the two values under study. The two values under study may be measured and expected values of the voltage or current in the electrical grid. An unexpected change in the resulting value of this comparison, for instance an unexpected change in the difference or ratio of the values under study, can be an indication for the presence of a voltage step. Thus, the determination whether a voltage step is present can be performed by comparing expected or estimated values of the voltage or current in the electrical grid with measured or calculated values of the voltage or current in the electrical grid.

As a response to the detection of the presence of the voltage step, an insertion step S2 can be performed to virtually insert a resistance into the electrical grid, in particular into a current path from a voltage source converter, VSC, to the electrical grid. In other words, a virtual resistance can be inserted into the electrical grid. The insertion of the virtual resistance or virtually inserting the resistance can be performed by adjusting an output voltage of the VSC for the resulting current flowing from VSC to PCC to behave as if a physical resistance were inserted.

The necessary adjustment of the output voltage can be calculated by multiplying a value of a current flowing between the VSC and the PCC with a pre-defined resistance value, for instance according to the formula *V_{ad} = Z·I,* where I is the current and Z is the impedance. In this case, Z can be a pure resistance R. The resistance value can be chosen freely to achieve a desired decay time of the DC component. The obtained adjustment value V_{ad} or the adjusted voltage V_{ad} can be added to a voltage reference V_{ref} provided by the VSC control, for instance for obtaining an adjusted voltage reference V_{adref}. The adjusted voltage reference V_{adref} can then be applied to a voltage output of the VSC.

Thus, "virtually inserting a resistance" or "inserting a virtual resistance" may be understood as a process using a virtual resistance R or impedance Z for determining an adjusted voltage V_{ad}, wherein the adjusted voltage V_{ad} is used to adjust a voltage reference V_{ref} for obtaining an adjusted voltage reference V_{adref}. The adjusted voltage reference V_{adref} can be used as an output voltage of the VSC for the resulting current flowing from the VSC to a point of common coupling in the grid to behave as if a physical resistance were inserted.

Figure 2 shows a schematic block diagram illustrating further details of the general concept of the method for reducing DC component in the electrical grid as shown in Figure 1.

A control unit C, for instance a voltage source converter (VSC) control unit C, is used for performing the method. The control unit C can be an integral part of a voltage source converter or can be an individual unit separate from the voltage source converter. The control unit C can be configured to perform the method step S1 for detecting a voltage step. If the control unit C is an individual unit separate from the voltage source converter, the control unit C can be electrically connected to the voltage source converter. The control unit C can be void of an output current controller.

The detecting of the voltage step in the electrical grid can be performed by comparing a measured grid voltage Vₘ with an expected grid voltage Vₑ, for instance at a point of common coupling, PCC, output of the electrical grid or at a voltage source converter, VSC, output. For instance, the voltage step in the electrical grid is detected if there is a deviation of the measured grid voltage Vₘ from the expected grid voltage Vₑ that is larger than a threshold value. The deviation can be a difference between the measured grid voltage Vₘ and the expected grid voltage Vₑ. The threshold value is for instance a pre-defined value or a pre-defined value function of time.

It is also possible that detecting the voltage step in the electrical grid comprises a step of determining a ratio of a measured grid voltage Vₘ and an expected grid voltage Vₑ. For instance, the voltage step in the electrical grid is detected if the measured grid voltage Vₘ differs by at least 3 %, 5 %, 10 %, 15 %, 20 %, 25 % or by at least 30 % or 50 % from the expected grid voltage Vₑ.

Alternatively or in addition, as indicated in Figure 2, the voltage step can be detected by overcurrent detection. Here, a current I, for instance in a current path between the voltage source converter and the point of common coupling, PCC, of the electrical grid, can be evaluated. Such a current I may be a measured current Iₘ or a calculated current I_{c}.

The control unit C comprises a control algorithm. The control algorithm can be configured to virtually insert a resistance R, for instance in form of an impedance Z, into the electrical grid or into a current path towards the electrical grid, only when a voltage step is detected. Such a voltage step usually occurs during grid transients that may cause a sharp deviation of the measured grid voltage from an expected grid voltage. By inserting a virtual resistance R into a current path for instance from the voltage source converter to the electrical grid, negative effects of the voltage deviation, for instance DC offsets in the measured current, can be reduced in an especially fast and convenient manner.

The insertion step S2 shown in Figure 2, using input values of the resistance R as well as of the current I, has already been explained in more detail in connection with Figure 1. The current I can be a current flowing for instance between the voltage source converter and a point of common coupling, PCC. The current I can be a measured current Iₘ or a calculated current I_{c}.

As illustrated in Figure 2, the insertion of the virtual resistance R can be performed by adjusting an output voltage of the VSC, which is an adjusted voltage reference V_{adref}. The adjustment of the output voltage of the VSC resulting in the adjusted voltage reference V_{adref} can be performed by adding an adjusted voltage V_{ad} with V_{ad} = I·Z or V_{ad} = I·R to a voltage reference V_{ref} provided by the control C or VSC control C.

In other words, the insertion of the virtual resistance R can be performed by adjusting the output voltage of the VSC, wherein an adjustment of the output voltage of the VSC is provided by an adjustment value V_{ad}, which is calculated by multiplication of a current I with a pre-defined resistance value R. The current I is in particular the current flowing between the VSC and the point of common coupling of the electrical grid. Here, the pre-defined resistance value R can be an impedance Z being a pure resistance. Such resistance value R can be time-dependent and adjustable for achieving a targeted decay time.

The resistance value R or the impedance Z can be chosen freely, for instance to be time-dependent, for obtaining a desired decay time. Also, for controlling the voltage reference V_{ref} or the adjusted voltage reference V_{adref}, a magnitude of the virtual resistance R can be inserted in a time-dependent manner. Thus, the magnitude of the virtual resistance R can be a function of time and is adjustable.

The method can comprise a step of controlling a duration of inserting the virtual resistance for minimizing disturbance of the VSC control. It is often desired that the insertion of the virtual resistance shall be kept to a minimum length of time so that the control C or the VSC control will be disturbed as little as possible. The time limitation can be realized by a step of time setting TS shown in Figure 2. This step can be performed after a voltage step has been detected in the detection step S1. Thus, time setting can be seen as a preparation step for the insertion step S2.

The method can comprise a step of filtering an activation signal AS for preventing sharp changes in the voltage reference V_{ref} and/or in the adjusted voltage reference V_{adref}. For preventing such too sharp changes, the activation signal AS can be filtered. The filtering of the activation signal can be performed during a filtering F prior to or during the insertion step S2. Thus, the filtering step F can also be seen as a preparation step for the insertion step S2.

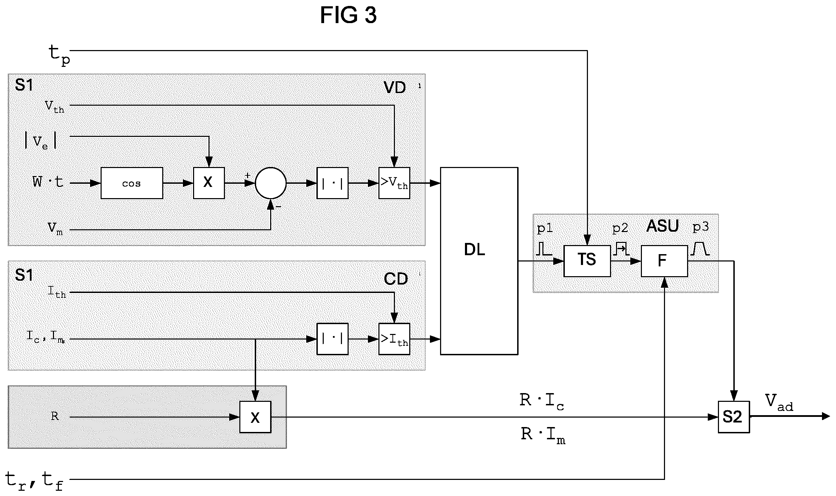

Figure 3 shows a further schematic block diagram illustrating even more details of some method steps of the method for reducing DC component in an electrical grid as shown in Figure 1 and/or Figure 2. In particular, some method steps prior to the determination of the adjustment value V_{ad} or the adjusted voltage V_{ad} are described in greater detail.

The detection step S1 can comprise a step VD for voltage detection, for instance for voltage drop detection. Alternatively or in addition, the detection step S1 can comprise a step CD for current detection, for instance for overcurrent detection.

For detecting a voltage step or transient voltage in the step VD for voltage detection, it is also possible to perform an estimation of the grid voltage angle W·t, for instance in radians, so that the estimated voltage in the electrical grid can be visualized as a time-dependent cosine or sine function. For estimating the magnitude of the time-dependent cosine function, an estimation of the grid voltage magnitude |Vₑ|, for example in Volts, can be performed. The estimation of the grid voltage angle W·t and the estimation of the grid voltage magnitude |Vₑ| can be used to evaluate an estimated or expected voltage Vₑ. The estimated or expected voltage Vₑ can be provided by the multiplicator x shown in Figure 3.

A measurement of an instantaneous grid voltage can be performed to obtain a measured voltage Vₘ. The expected voltage Vₑ and the measured voltage Vₘ can be compared to each other, for example, by using an absolute function |·| to obtain an absolute voltage function |V|, for instance. This function describes for example differences or fluctuations between the expected voltage Vₑ and the measured voltage Vₘ.

The absolute function |V| can be a time-dependent function. The absolute function |V| can provide information on deviations of the measured grid voltage Vₘ from the expected grid voltage Vₑ. Here, the deviations can be reflected by differences between the measured grid voltage Vₘ and the expected grid voltage Vₑ. For example, it can be determined that a voltage step is present when the absolute function |V| or a deviation of the measured grid voltage Vₘ from the expected grid voltage Vₑ is larger than a threshold value Vₐₙ or a voltage threshold function Vₜₕ. The threshold value Vₜₕ can be a parameter specifying a voltage level in Volts.

For detecting a voltage step or transient voltage in the step CD for current detection, in particular for overcurrent detection, a measurement or an evaluation of an instantaneous current, for instance grid current, can be performed to obtain a measured current Iₘ or a calculated current I_{c}. Such a current can be a current flowing in a current path between the voltage source converter and a point of common coupling of the electrical grid.

The measured current Iₘ or calculated current I_{c} can be used, for example, by applying an absolute function |·| to obtain an absolute current function |I|. The absolute function |I| can be a time-dependent function. The absolute function |I| can provide information on the magnitude of the current and its fluctuations. For example, it can be determined that a voltage step is present when the absolute function |I| is larger than a threshold value Iₜₕ or a current threshold function Iₜₕ. The threshold value Iₜₕ can be a parameter specifying a current level in Amperes.

As illustrated in Figure 3, the measured current Iₘ or the calculated current I_{c} can be used to adjust a magnitude, for instance a time-dependent magnitude, of the resistance R or impedance Z. Depending on the measured current Iₘ or the calculated current I_{c}, a parameter R specifying a virtual resistance for instance in Ohm can be used to determine most appropriate values for obtaining the desired adjustment value V_{ad} or the adjusted voltage V_{ad}. The adjusted voltage V_{ad} can be R · I_{c} or R · Iₘ.

Figure 3 also shows a decision logic step DL or a decision logic unit DL. Depending on the results obtained from the voltage detection VD and/or from the current detection CD, it can be decided whether a voltage step is present or not and whether appropriate action shall be taken accordingly. In particular, the decision logic DL can create a pulse p1 based on the outputs of the voltage detection VD and/or of the current detection CD.

Figure 3 describes an activation shaping step ASU or an activation shaping unit ASU. This step basically comprises the time setting step TS and the filtering step F shown in Figure 2. The activation shaping step ASU is configured for preventing sharp changes in the voltage reference V_{ref} and/or in the adjusted voltage reference V_{adref}. This can be achieved by adjusting an activation signal AS pulse. For instance, an original pulse, which can be the pulse p1 generated by the decision logic DL, can be extended to an extended pulse p2, which subsequently can be shaped to a shaped pulse p3.

For extending the original pulse p1 for obtaining the extended pulse p2, a parameter tₚ specifying a pulse duration for instance in seconds may be used in the time setting step TS. Here, a monostable multivibrator / flip-flop can be used. By inserting tᵣ and t_{f}, which are parameters specifying rise and fall times for instance in seconds, respectively, the extended pulse p1 will be shaped for obtaining the shaped pulse p2 after the filtering step F. The parameters tᵣ and t_{f} can specify the rise and fall times of the shaped pulse p3, respectively. The shaped pulse p3 can be used in the insertion step S2 for obtaining an appropriate adjusted voltage V_{ad} which does not cause sharp changes in the voltage reference V_{ref} and/or in the adjusted voltage reference V_{adref}.

Thus, by performing activation shaping or activation signal shaping prior to the insertion step S2, it can be ensured that an adjusted voltage V_{ad} can be added to a voltage reference V_{ref} in such a way that sharp changes in the voltage reference V_{ref} or in the adjusted voltage reference V_{adref} are prevented.

Figures 1 to 3 describe some method steps which can be performed by a voltage source converter, VSC, control unit for reducing direct current, DC, component in an electrical grid. The VSC control unit is configured to virtually insert a resistance into a current path from a voltage source converter, VSC, to the electrical grid as a response to a detection of a voltage step. Virtually inserting a resistance, i.e. inserting a virtual resistance, leads to an adjustment of the voltage reference V_{ref} by an adjustment value or adjusted voltage V_{ad}, resulting in the desired adjusted voltage reference V_{adref}, for instance at the output of the VSC. The voltage source converter control unit can be integrated in the VSC or be an individual unit which is not an integral part of the VSC.

The voltage source converter control unit can be part of a system configured for reducing DC component in the electrical grid, wherein the system can comprise a detection unit and the VSC control unit. The detection unit is configured to detect a voltage step in the electrical grid. The VSC control unit is configured to virtually insert a resistance into a current path from a VSC to the electrical grid as a response to a detection of the voltage step. The system can further comprise a time setting unit TS, a filtering unit F and/or a decision logic unit DL for performing the method steps described in this disclosure, in particular in connection with Figures 1 to 3.

The embodiments shown in the Figures as stated represent exemplary embodiments of this disclosure and do therefore not constitute a complete list of all embodiments according to the improved method for reducing direct current, DC, component in an electrical grid as well as according to the voltage source converter, VSC, control unit and a system comprising such unit. Actual arrangements may vary from the exemplary embodiments described above.

### Reference Signs

- S1: detection step
- S2: insertion step

- F: filtering step/ filtering unit
- TS: time setting step/ time setting unit

- I: current
- Iₘ: measured current
- I_{c}: calculated current

- V: voltage
- Vₘ: measured voltage
- Vₑ: expected voltage
- V_{ad}: adjusted voltage, adjustment value
- V_{ref}: voltage reference
- V_{adref}: adjusted voltage reference, output voltage

- R: resistance, parameter specifying a virtual resistance

- AS: activation signal
- ASU: activation shaping/ activation signal shaping

- VSC: voltage source converter
- C: control, control unit, VSC control, VSC control unit

- VD: voltage detection/ voltage drop detection
- CD: current detection/ overcurrent detection
- DL: decision logic

- W·t: grid voltage angle
- |·|: absolute function
- x: multiplicator

- Vₜₕ: voltage threshold value
- Iₜₕ: current threshold value

- tₚ: parameter specifying a pulse duration
- tᵣ: parameter specifying rise time of activation signal
- t_{f}: parameter specifying fall time of activation signal

- p1: pulse
- p2: extended pulse
- p3: shaped pulse

## Claims

1. A method for reducing direct current, DC, component in an electrical grid, the method comprising:
- detecting a voltage step in the electrical grid; and
- inserting a virtual resistance (R) into a current path from a voltage source converter, VSC, to the electrical grid as a response to a detection of the voltage step.

2. The method according to claim 1,
wherein the virtual resistance (R) is inserted into the electrical grid by a control algorithm only when the voltage step is detected.

3. The method according to any of the previous claims, wherein a magnitude of the virtual resistance (R) is inserted into the current path from the voltage source converter, VSC, to the electrical grid in a time-dependent manner.

4. The method according to any of the previous claims, wherein
- the insertion of the virtual resistance (R) is performed by adjusting an output voltage of the VSC, and
- an adjustment of the output voltage of the VSC is provided by an adjustment value (V_{ad}) which is calculated by multiplication of a current with a pre-defined resistance value, the current flowing between the VSC and a point of common coupling, PCC, of the electrical grid.

5. The method according to the previous claim, wherein
- the pre-defined resistance value is an impedance being a pure resistance, and
- the resistance value is adjustable for achieving a targeted decay time.

6. The method according to previous claim 4 or 5, further comprising:
- adding the adjustment value (V_{ad}) to a voltage reference (V_{ref}) for obtaining an adjusted voltage reference (V_{adref}), the voltage reference (V_{ref}) being provided by a VSC control, and
- applying the adjusted voltage reference (V_{adref}) to an output voltage of the VSC.

7. The method according to any of the previous claims, further comprising controlling a duration of inserting the virtual resistance (R) for minimizing disturbance of the VSC control.

8. The method according to any of claims 6 to 7, further comprising filtering an activation signal (AS) for preventing sharp changes in the voltage reference (V_{ref}).

9. The method according to any of the previous claims, wherein the detecting of the voltage step in the electrical grid comprises a step of comparing a measured grid voltage (Vₘ) with an expected grid voltage (Vₑ) at a point of common coupling, PCC, output of the electrical grid or at a voltage source converter, VSC, output.

10. The method according to any of previous claims 1 to 8, wherein the detecting of the voltage step in the electrical grid comprises detecting a deviation of a measured grid voltage (Vₘ) from an expected grid voltage (Vₑ), wherein the deviation is a difference between the measured grid voltage (Vₘ) and the expected grid voltage (Vₑ), the deviation being larger than a threshold value.

11. The method according to any of previous claims 1 to 8, wherein the detecting of the voltage step in the electrical grid comprises determining a ratio of a measured grid voltage (Vₘ) and an expected grid voltage (Vₑ) .

12. The method according to any of the previous claims, wherein the voltage step is detected by an overcurrent detection, wherein a current flowing between the voltage source converter, VSC, and a point of common coupling, PCC, of the electrical grid is evaluated.

13. A voltage source converter, VSC, control unit (C) for reducing direct current, DC, component in an electrical grid, the VSC control unit being configured to insert a virtual resistance (R) into a current path from a voltage source converter, VSC, to the electrical grid as a response to a detection of a voltage step.

14. A system for reducing direct current, DC, component in an electrical grid, the system comprising a detection unit and a voltage source converter, VSC, control unit, wherein
- the detection unit is configured to detect a voltage step in the electrical grid, and
- the VSC control unit is configured to insert a virtual resistance (R) into a current path from a voltage source converter, VSC, to the electrical grid as a response to a detection of the voltage step.

15. The system according to claim 14, further comprising a time setting unit (TS) and a filtering unit (F), wherein the system is configured to perform the method according to any of claims 1 to 12.
